# EUROPEAN PATENT SPECIFICATION

(11) **EP 1 927 814 B1**
(45) Date of publication and mention of the grant of the patent: **29.02.2012**
(21) Application number: 07121153.6
(22) Date of filing: 20.11.2007
(51) Int. Cl.: F24J 2/04, E04F 13/08

(54) **Tile for using solar energy**
Fliese zur Verwendung von Sonnenenergie
Dalle pour utilisation de l'énergie solaire

(30) Priority: 29.11.2006 IT BS20060204
(43) Date of publication of application: 04.06.2008
(73) Proprietor: Ideasol S.r.l., 25020 Cignano di Offlaga (BS) (IT)
(72) Inventor: Molineri, Roberto, 12020, Valgrana (Cuneo) (IT)
(74) Representative: Pulieri, Gianluca Antonio

(56) References cited:
- EP-A- 0 111 763
- EP-A- 1 526 344
- EP-A2- 0 096 413
- WO-A-2004/057244
- DE-A1- 3 036 897
- DE-A1- 3 815 704
- DE-C1- 19 710 915
- FR-A- 2 534 672
- US-A1- 2004 025 864

## Description

The present invention relates to a tile suitable for using solar energy for heating a liquid, in particular water.

As it is known, there are several embodiments of tiles designed for making a floor, for example of a terrace or a yard, capable of heating a liquid flowing therethrough using the solar energy.

Some examples of tiles according to the above are described in documents CH656451, CH661340, DE10044513, DE3008610, DE3010420, DE3317731, DE3400483, DE8512925, EP1526344, EP0034144, GB2115135 US4164933and FR2534672.

However, known solutions exhibit some disadvantages.

In particular, in the reference field, the efficiency of such tiles, that is, the capability that they exhibit of transferring the heath of the sun rays that irradiate them to the liquid passing therein, is of fundamental importance.

The efficiency of the tiles imposes a more or less wide surface extension of the floor that allows meeting the user's requirements and of course, the need of a more or less heavy economic investment.

The currently known tiles do not exhibit a particularly high efficiency.

The object of the present invention is to provide to a tile suitable for using solar energy for heating a liquid which should be particularly effective.

Such object is achieved by a tile obtained in accordance with the following claim 1. The dependent claims describe embodiment variations.

The features and advantages of the tile according to the present invention will appear more clearly from the following description, made by way of an indicative and non-limiting example, with reference to the annexed figures, wherein:

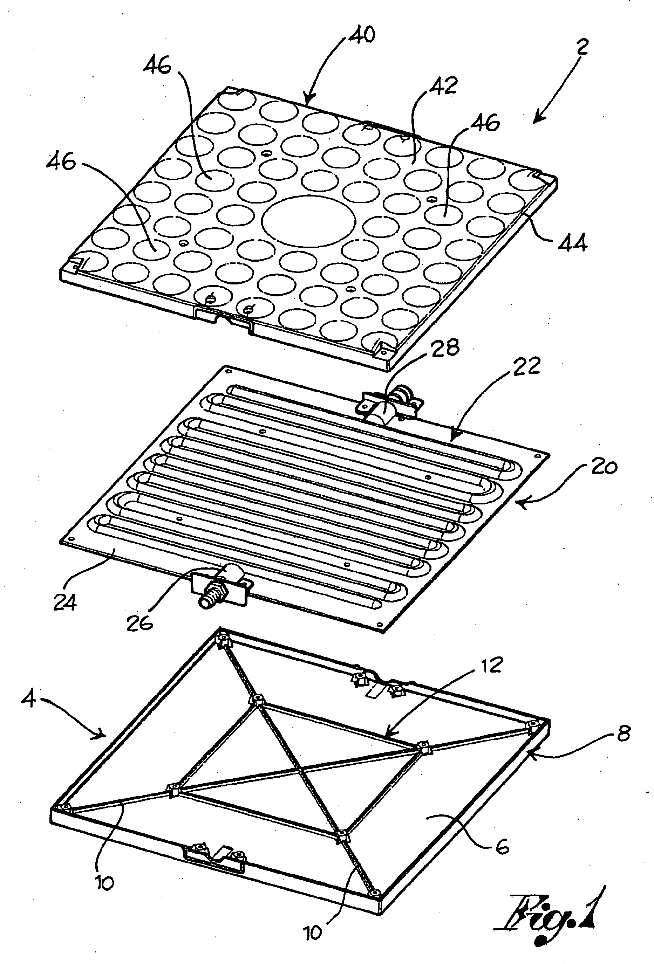

- figure 1 shows a perspective view with separated parts of a tile according to the present invention;

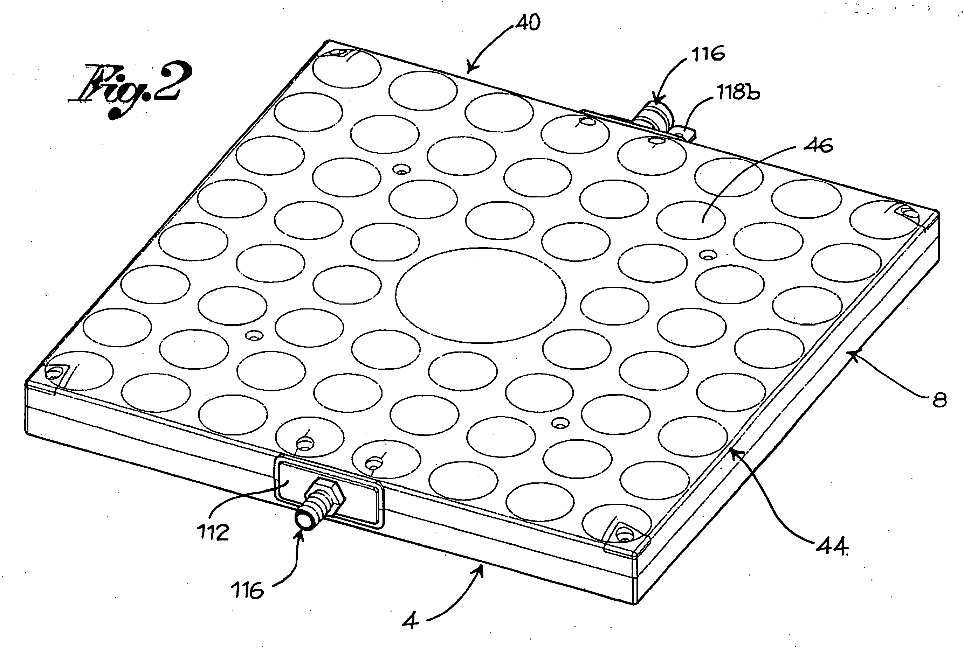

- figure 2 shows the tile of figure 1 in assembled configuration;

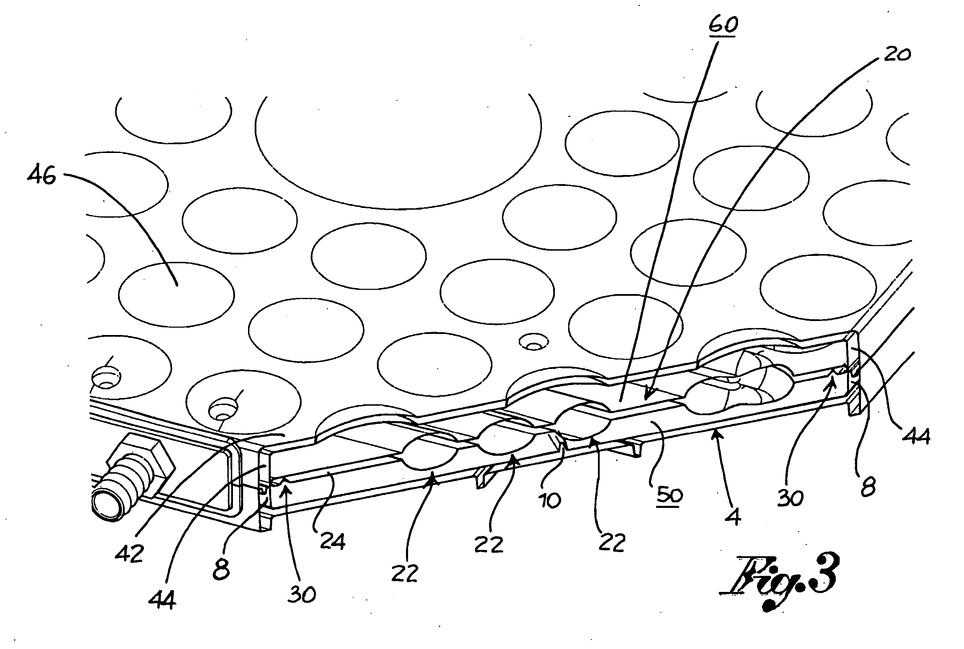

- figure 3 shows a partly cutaway view of the tile of figure 2;

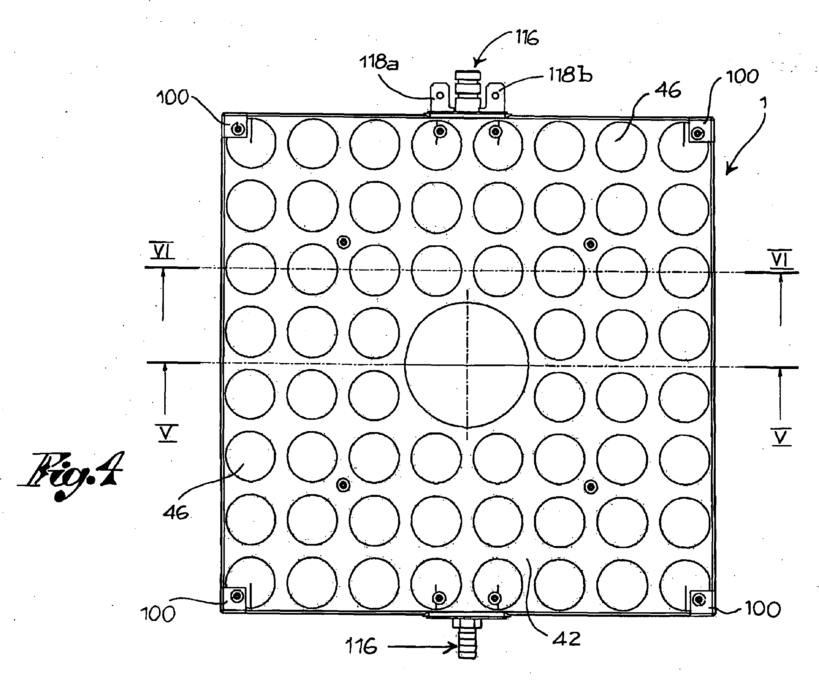

- figure 4 shows a plan view of the tile of figure 2;

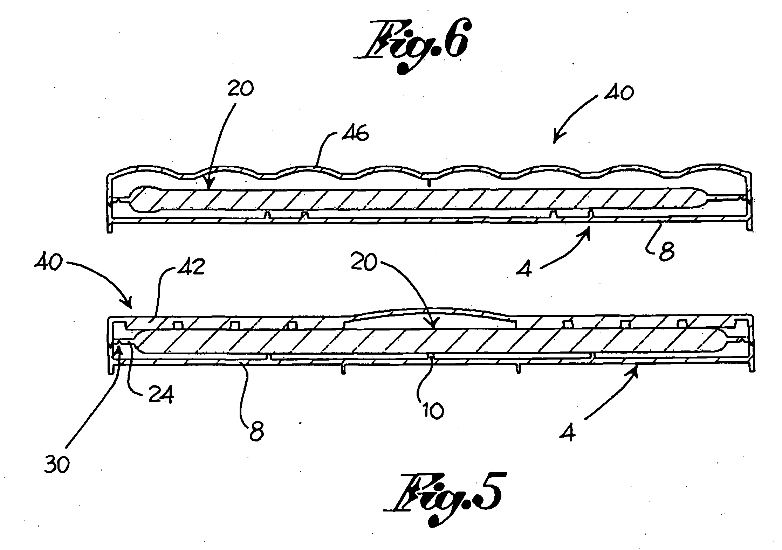

- figure 5 shows a cutaway view of the tile of figure 4, along the section plane V-V of figure 4;

- figure 6 shows a cutaway view of the tile of figure 4, along the section plane VI-VI of figure 4;

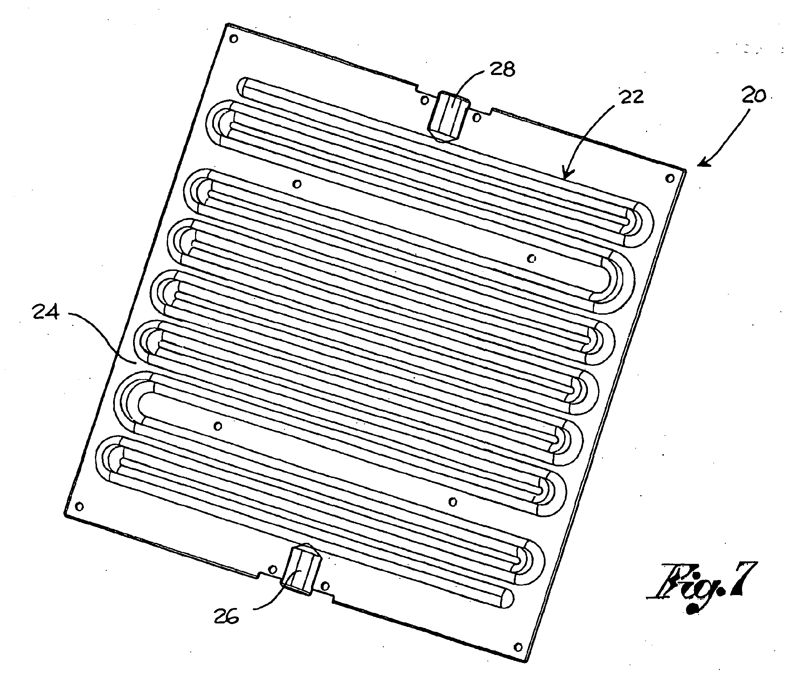

- figure 7 shows a perspective view of an intermediate plate of the tile of figure 1;

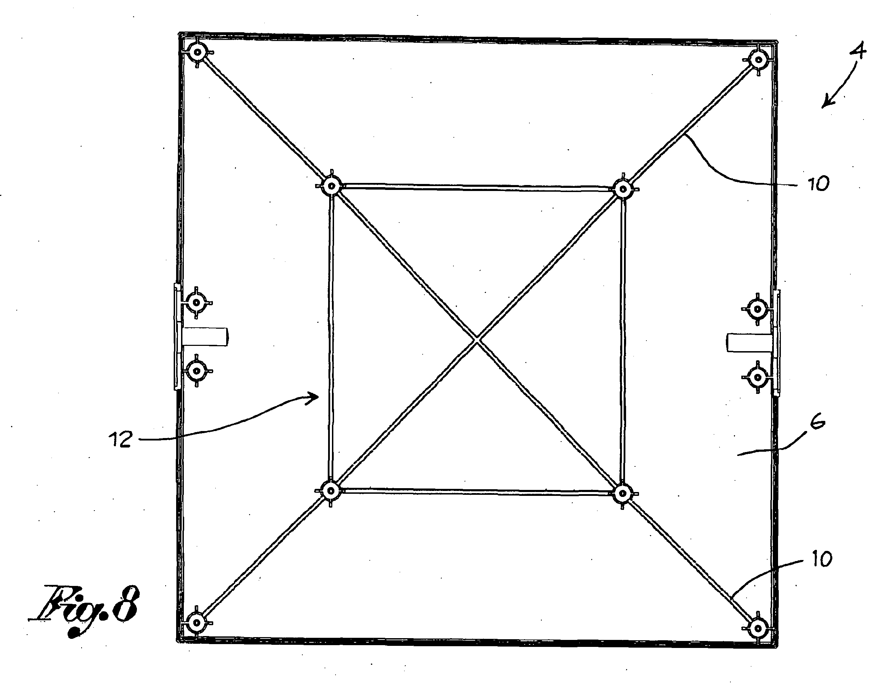

- figure 8 shows a plan view of a base of the tile of figure 1;

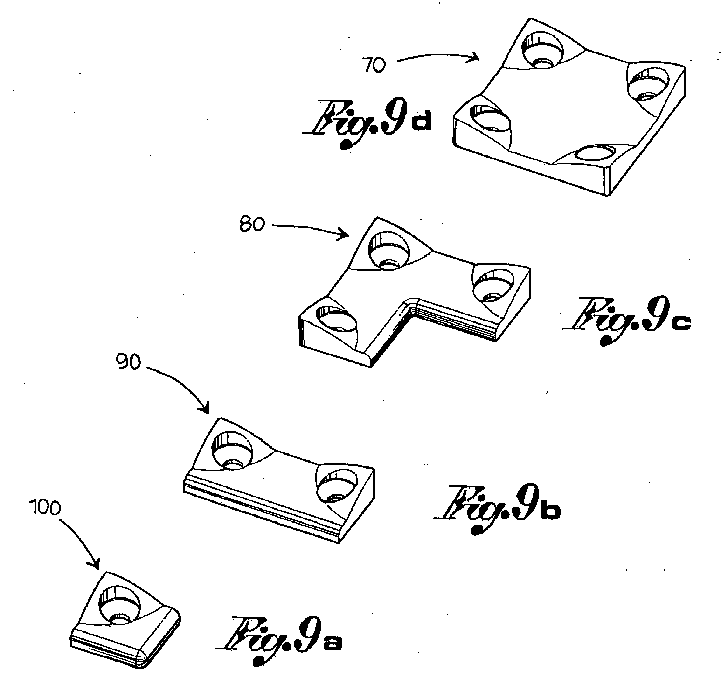

- figures 9a to 9d show a perspective view of connection inserts for a floor made up of the tiles of figure 2;

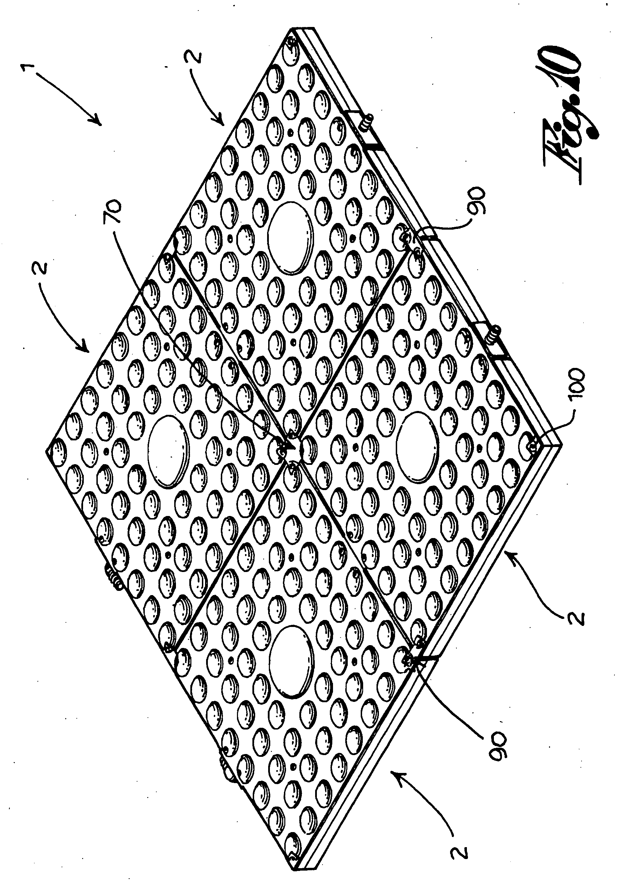

- figure 10 shows a floor made up of a set of tiles according to figure 2;

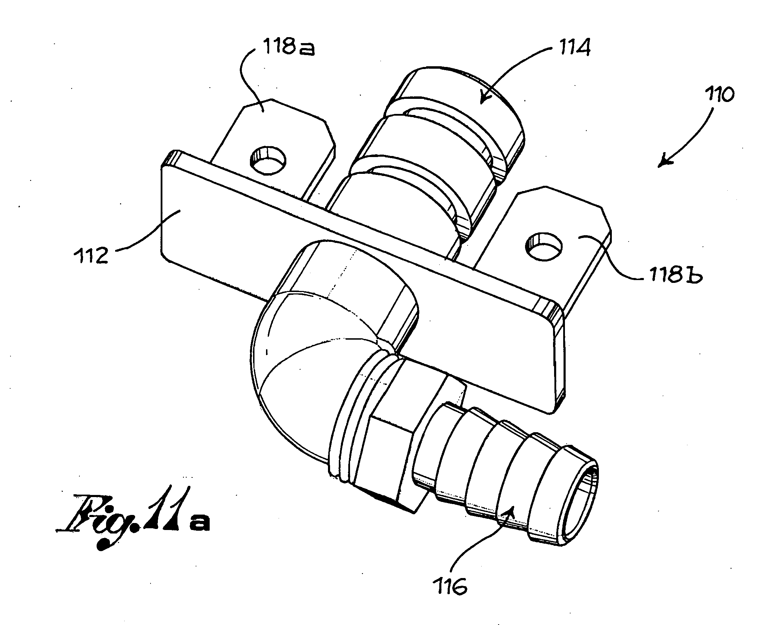

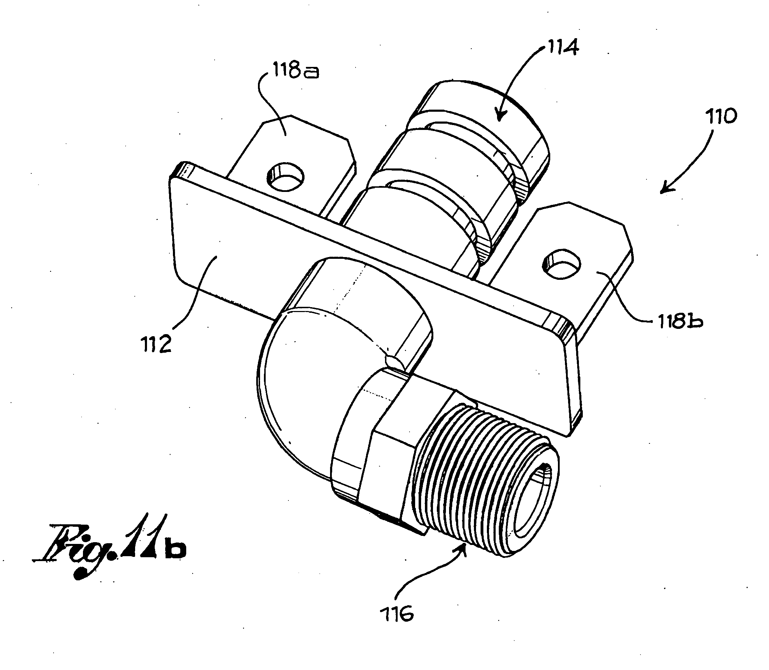

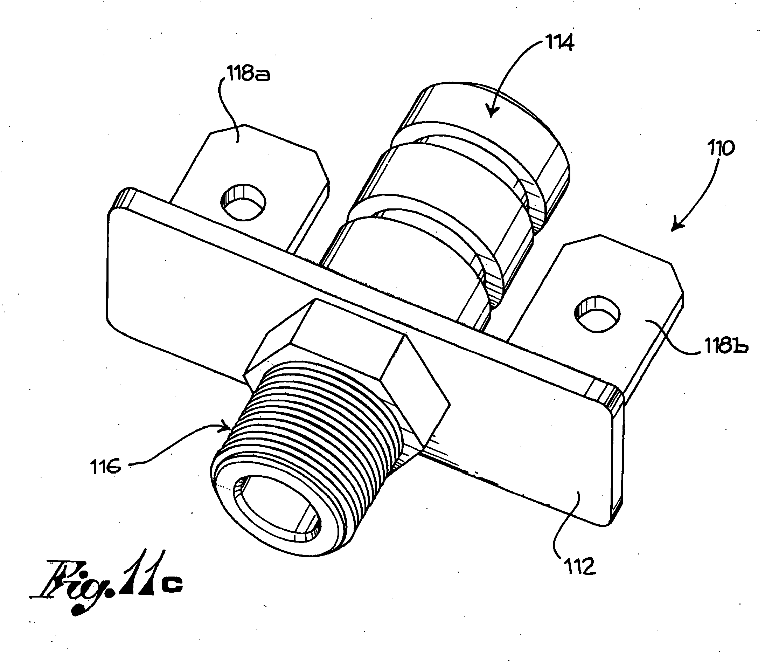

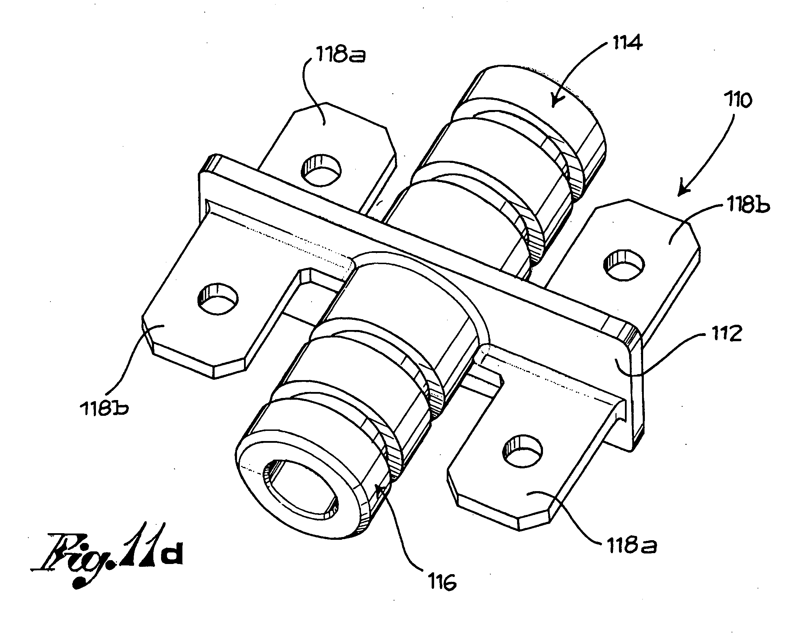

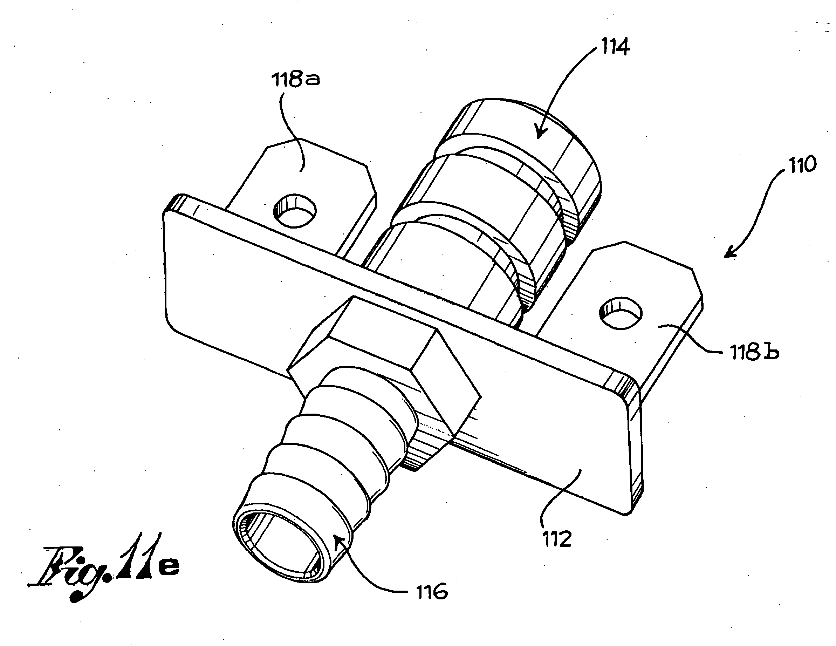

- figures 11a to 11e show perspective views of connectors of the tile of figure 2.

In accordance with the annexed figures, reference numeral 1 globally indicates a floor made up of a set of tiles 2, mechanically and hydraulically connected to each other. Floor 1 or a single tile 2 is suitable for being associated to a liquid circulation system.

Tile 2, preferably suitable for walking and for vehicles, is suitable for being exposed to the sun rays for using the solar energy for heating the liquid passing therethrough.

Tile 2 comprises a base 4, intended for resting on a support surface, for example on the ground surface of a terrace, a yard and the like, or supported by a frame, for example for tilting on the floor so as to be favourably exposed to the sun rays.

Preferably, base 4 comprises a base bottom 6, for example quadrangular, surrounded by a peripheral annular base wall 8 which defines a base space.

According to a preferred embodiment, base 4 comprises at least one rib 10. For example, base 4 comprises a pair of ribs 10, protruding from the base bottom 6 and crossed with each other.

Moreover, base 4 comprises a quadrangular rib 12 which with the corners thereof intercepts the above cross ribs 10.

Base 4 is made in a single piece, of a plastic material, by an injection moulding process.

Moreover, tile 2 comprises an intermediate plate 20, resting on base 4, comprising a duct 22 for the liquid passage.

Plate 20 comprises a body wall 24, for example quadrangular, wherefrom duct 22 protrudes.

Duct 22 protrudes from a face and from the other of the body wall 24 and is shaped as a coil.

Plate 20 further comprises an inlet 26 and an outlet 28, also protruding from the body wall and in fluid communication with duct 22, for connecting it to a further duct of a further tile or to said liquid circulation system.

Plate 20 exhibits a weakening groove 30, preferably facing base 4, which extends parallel to the sides of the edge of the body wall.

The weakening groove is suitable for weakening the body wall 24 in the proximity of the free edge, for facilitating the deformation of the body wall portion close to the free edge.

The intermediate plate 20 is made in a single piece of plastic material by a blowing process.

Moreover, tile 20 comprises a cover 40, arranged on the intermediate plate 20.

In other words, tile 2 takes a "sandwich" structure wherein the intermediate plate is arranged between base 4 and cover 40.

Cover 40 comprises a covering bottom 42 and a peripheral annular covering wall 44 that surrounds it, defining a covering space.

Preferably, cover 40 comprises a plurality of projections 46, protruding from the covering bottom 42, externally relative to the intermediate plate 20.

Preferably, projections 46 are shaped as half-caps.

Cover 40 is preferably made in a single piece, of a plastic material, by an injection moulding process.

Preferably, moreover, the cover or at least the covering bottom, are made of transparent or semi-transparent material.

In the assembled configuration, the intermediate plate 20 is overlapped to base 4 and cover 40 is overlapped to the intermediate base 20.

This way, there are defined a closed lower air space 50 between the intermediate plate 20 and base 4 and a closed higher air space 60 between the intermediate plate 20 and cover 40.

The edge of the body wall 24 of plate 20 is abutted on the peripheral annular base wall 8 or on the annular peripheral covering wall 44, so that the lower air space is separated from the higher air space.

It has to be understood that the wall body 24 is an example of partition means suitable for separating the lower air space 50 from the higher air space 60.

Moreover, groove 30 of the body wall is suitable for weakening the wall portion close to the edge, so that, for example following the thermal expansions of the body wall, this gets deformed in abutment with the peripheral walls 8, 44, increasing the separation capacity.

The intermediate plate 20, moreover, rests on ribs 10 at discrete points thereof, limiting the contact of the plate with further bodies.

According to a preferred embodiment, tile 2 further comprises closing means, suitable for tightening the intermediate plate 20 between base 4 and cover 40.

For example, said closing means comprise at least one screw suitable for crossing cover 40 and the intermediate plate 20 and for engaging with base 4.

For example, said screws arrange at the corners of a square inside the cover edge.

In floor 1, tiles 2 are mechanically connected to each other by at least one insert, suitable for angularly engaging with said tiles.

In an embodiment, the quadrangular insert 70 is suitable for connecting four tiles at the adjacent corners.

In a further embodiment, the L-shaped insert 80 is suitable for connecting three tiles at the adjacent corners.

In an even further embodiment, the rectangular insert 90 is suitable for connecting two tiles at the adjacent corners.

Moreover, floor 1 comprises at least one square insert 100 suitable for covering the corner of a tile.

According to a preferred embodiment, moreover, tile 2 comprises at least one connector 110 for the hydraulic connection of duct 22 to a further duct of a further tile or to said circulation system.

Preferably, connector 110 comprises:

- an abutment plate 112;

- an inlet duct 114, protruding from the abutment plate 112 on a side thereof, suitable for being inserted in said inlets 26, 28 of the intermediate plate 20;

- an outlet duct 116 in communication with the inlet duct 114, protruding from the abutment plate 112 on the other side thereof;

- at least one positioning tab 118a, 118b, protruding from the abutment plate 112 on the inlet duct side 114, suitable for resting in abutment of the intermediate base 20 for positioning the connector.

In particular, said connector 110 comprises a pair of tabs 118a, 118b, not aligned with each other and arranged at the sides of the inlet duct 114, so as to arrange on one face and on the other of the intermediate plate 20.

According to a further embodiment, said connector 110 comprises a further pair of tabs, arranged on the side of the outlet duct 116.

The misalignment of the tabs is particularly advantageous for ensuring the steadiness of the connection of the connector to the intermediate plate 20.

Innovatively, the tile according to the present invention is particularly effective in transferring the heat to the liquid passing in the duct, since the air spaces separated from one another allow preventing a heat dissipation to the tile base.

Moreover, the higher air space makes a sort of greenhouse effect, which increases the heating of the liquid in the duct.

Advantageously, moreover, the contact between the intermediate plate and the peripheral walls of the base and/or of the cover is limited to one line, thus limiting heat dissipation through contact.

According to a further advantageous aspect, the intermediate plate is almost suspended into the chamber made up of the base and cover, as it rests only on discrete points; this feature limits the contact surfaces, preventing further heat dissipation.

It is clear that a man skilled in the art can make changes and adjustments to the tile described above in order to meet specific and incidental needs, all falling within the scope of protection defined in the following claims.

## Claims

1. A tile (2) suitable for using solar energy for heating a liquid, for example water, passing therethrough, wherein said tile comprises:
- a base (4) suitable for resting on a support surface or supported on a frame;
- an intermediate plate (20), arranged above said base, comprising a duct (22) for the passage of said liquid;
- a cover (40) overlapped to said intermediate plate for covering it;
wherein, in an assembled configuration of the tile, a closed lower air space (50) is defined between the intermediate plate (20) and the base and a closed higher air space (60) is defined between the intermediate plate and the cover;
wherein said tile further comprises partition means suitable for separating the lower air space from the higher air space, and wherein
said intermediate plate comprises a body wall (24) and said duct protrudes from said body wall, said body wall separating the lower air space from the higher air space,
wherein said duct extends along a path withdrawn Into the tile;
said tile being **characterized in that**
the duct is shaped as a coil and said intermediate plate is made as a single piece of plastic material by blowing process
wherein said body wall exhibits weakening means, suitable for structurally weakening the portion of said body wall in the proximity of the free edge

2. Tile according to claim 1, wherein said base comprises a base space surrounded by a peripheral annular base wall (8), the edge of said body wall being in abutment with said annular base wall.

3. Tile according to claim 2, wherein said cover comprises a covering space surrounded by an annular covering wall (44), the edge of said body wall being in abutment with said annular covering wall.

4. Tile according to previous claims, wherein said weakening means comprise a weakening groove (30) in the proximity of the free edge of the body wall (24).

5. Tile according to claim 1, wherein said groove faces said base.

6. Tile according to claim 4 or 5, wherein said groove is parallel to the side of the body wall.

7. Tile according to any one of the previous claims, wherein said base comprises support means suitable for supporting the intermediate plate at discrete points.

8. Tile according to claim 6, wherein said support means comprise ribs (10) protruding from the base bottom.

9. Tile according to claim 8, wherein said support means comprise a pair of ribs that cross with each other and extend along the diagonals thereof.

10. Tile according to any one of the previous claims, wherein said base is made as a single piece of a plastic material by injection moulding.

11. Tile according to any one of the previous claims, wherein the cover comprises a covering bottom (42) and projections (46) protruding from said bottom, externally relative to the higher air space (60).

12. Tile according to claim 11, wherein said projections are shaped as half-cap.

13. Tile according to any one of the previous claims, wherein said cover is made as a single piece of a plastic material by an injection moulding process.

14. Tile according to any one of the previous claims, wherein said cover is made of a transparent or semi-transparent material.

15. Tile according to any one of previous claims, wherein said duct protrudes from said body wall from one face and from the other thereof.

16. Tile according to any one of previous claims, wherein said intermediate plate comprises an inlet (26) and an outlet (28) for connecting the duct to a further duct of a further tile or to said liquid circulation system.

17. Tile according to claim 16, comprising at least one connector (110) suitable for being inserted in said inlets for the hydraulic connection of the duct.

18. Tile according to claim 17, wherein said connector comprises
- an abutment plate (112);
- an inlet duct (114), protruding from the abutment plate on a side thereof, suitable for being inserted in said inlets;
- an outlet duct (116) in communication with the inlet duct, protruding from the abutment plate on the other side thereof,
- at least one positioning tab (118a, 118b), protruding from the abutment plate on the inlet duct side, suitable for resting in abutment of the intermediate base for positioning the connector.

19. Tile according to claim 18, wherein said connector comprises a pair of tabs not aligned with each other, so as to arrange on one face and on the other of the Intermediate plate.

20. Tile according to claim 19, wherein said connector comprises a further pair of tabs, arranged on the side of the outlet duct.

21. Tile according to any one of the previous claims, comprising closing means suitable for tightening said intermediate plate between said base and said cover.

22. Tile according to claim 21, wherein said closing means comprise a plurality of screws suitable for crossing the cover and the intermediate plate and for engaging with said base.

23. A set of tiles comprising:
- at least two tiles made according to any one of the previous claims:
- at least one angular insert (70, 80, 90, 100) for the mechanical connection between said tiles.

24. A set according to claim 23, wherein said insert (70) is quadrangular and suitable for connecting four tiles at the adjacent corners.

25. A set according to claim 23, wherein said insert (80) is L-shaped and suitable for connecting three tiles at the adjacent corners.

26. A set according to claim 23, wherein said insert (90) is rectangular and suitable for connecting two tiles at the adjacent corners.

27. A set according to any one of claims 23 to 26, comprising a square insert (100) suitable for covering the corner of a tile.

## Patentansprüche

1. Fliese (2), die zur Verwendung von Sonnenenergie geeignet ist, um eine Flüssigkeit, zum Beispiel Wasser, die durch sie hindurch fließt, zu heizen, wobei die Fliese umfasst:
- eine Grundplatte (4), die geeignet ist, um auf einer Auflagefläche zu lagern oder auf einem Rahmen gehalten zu werden;
- eine Zwischenplatte (20), die über der Grundplatte angeordnet ist, die einen Kanal (22) für den Durchgang der Flüssigkeit umfasst;
- eine Abdeckung (40), welche die Zwischenplatte überlappt, um sie zu bedecken;
wobei in einem montierten Aufbau der Fliese ein geschlossener unterer Luftraum (50) zwischen der Zwischenplatte (20) und der Grundplatte definiert ist und ein geschlossener oberer Luftraum (60) zwischen der Zwischenplatte und der Abdeckung definiert ist;
wobei die Fliese ferner Unterteilungsmittel umfasst, die geeignet sind, um den unteren Luftraum von dem oberen Luftraum zu trennen, und wobei
die Zwischenplatte eine Körperwand (24) umfasst, und der Kanal von der Körperwand vorsteht, wobei die Körperwand den unteren Luftraum von dem oberen Luftraum trennt, wobei der Kanal sich entlang eines Wegs erstreckt, der in die Fliese zurückgezogen ist;
wobei die Fliese **dadurch gekennzeichnet ist, dass** der Kanal als eine Rohrschlange geformt ist, und die Zwischenplatte durch einen Blasprozess als ein einziges Stück aus Kunststoffmaterial gefertigt ist,
die Körperwand Schwächungsmittel aufweist, die geeignet sind, um den Abschnitt der Körperwand in unimittelbarer Nähe des freien Rands zu schwächen.

2. Fliese nach Anspruch 1, wobei die Grundplatte einen Grundplattenraum umfasst, der von einer ringförmigen Grundplattenumfangswand (8) umgeben ist, wobei der Rand der Körperwand an der ringförmigen Grundplattenwand anliegt.

3. Fliese nach Anspruch 2, wobei die Abdeckung einen Abdeckraum umfasst, der von einer ringförmigen Abdeckwand (44) umgeben ist, wobei der Rand der Körperwand an der ringförmigen Abdeckwand anliegt.

4. Fliese nach den vorhergehenden Ansprüchen, wobei die Schwächungsmittel eine Schwächungsnut (30) in unmittelbarer Nähe des freien Endes der Körperwand (24) umfasst.

5. Fliese nach Anspruch 1, wobei die Nut der Grundplatte zugewandt ist.

6. Fliese nach Anspruch 4 oder 5, wobei die Nut parallel zu der Seite der Körperwand ist.

7. Fliese nach einem der vorhergehenden Ansprüche, wobei die Grundplatte Haltemittel umfasst, die geeignet sind, die Zwischenplatte an separaten Punkten zu halten.

8. Fliese nach Anspruch 6, wobei die Haltemittel Rippen (10) umfassen, die von der Unterseite der Grundplatte vorstehen.

9. Fliese nach Anspruch 8, wobei die Haltemittel ein Paar Rippen umfassen, die einander kreuzen und sich entlang ihrer Diagonalen erstrecken.

10. Fliese nach einem der vorhergehenden Ansprüche, wobei die Grundplatte durch Spritzgießen als ein einziges Stück aus Kunststoffmaterial gefertigt ist.

11. Fliese nach einem der vorhergehenden Ansprüche, wobei die Abdeckung eine Abdeckungsunterseite (42) und Vorsprünge (46), die von dieser Unterseite relativ zu dem oberen Luftraum (60) nach außen vorstehen, umfasst.

12. Fliese nach Anspruch 11, wobei die Vorsprünge als Halbkappe geformt sind.

13. Fliese nach einem der vorhergehenden Ansprüche, wobei die Abdeckung durch ein Spritzgießverfahren als ein einziges Stück aus Kunststoffmaterial gefertigt ist.

14. Fliese nach einem der vorhergehenden Ansprüche, wobei die Abdeckung aus einem transparenten oder halbtransparenten Material gefertigt ist.

15. Fliese nach einem der vorhergehenden Ansprüche, wobei der Kanal von der Körperwand von einer Seitenfläche zu ihrer anderen Seitenfläche vorsteht.

16. Fliese nach einem der vorhergehenden Ansprüche, wobei die Zwischenplatte einen Einlass (26) und einen Auslass (28) zum Verbinden des Kanals mit einem weiteren Kanal einer weiteren Fiese oder mit d e m Flüssigkeitszirkulationssystem umfasst.

17. Fliese nach Anspruch 16, die wenigstens einen Verbinder (110) umfasst, der geeignet ist, in die Einlässe für den hydraulischen Anschluss des Kanals eingesetzt zu werden.

18. Fliese nach Anspruch 17, wobei der Verbinder umfasst:
- eine Auflagerplatte (112);
- einen Einlasskanal (114), der von der Auflagerplatte auf einer Seite davon vorsteht, der geeignet ist, in die Einlässe eingesetzt zu werden;
- einen Auslasskanal (116) in Verbindung mit dem Einlasskanal, der von der Auflagerplatte auf deren anderer Seite vorsteht;
- wenigstens eine Positionierungszunge (118a, 118b), die von der Auflagerplatte auf der Einlasskanalseite vorsteht, die geeignet ist, anliegend an der Zwischenbasis zum Positionieren des Verbinders zu ruhen.

19. Fliese nach Anspruch 18, wobei der Verbinder ein Paar Nasen umfasst, die nicht miteinander ausgerichtet sind, um auf einer Seitenfläche und auf der anderen Seitenfläche der Zwischenplatte angeordnet zu werden.

20. Fliese nach Anspruch 19, wobei der Verbinder ferner ein Paar Nasen umfasst, die auf der Seite des Auslasskanals angeordnet sind.

21. Fliese nach einem der vorhergehenden Ansprüche, die Schließmittel umfasst, die geeignet sind, um die Zwischenplatte zwischen der Grundplatte und der Abdeckung festzuziehen bzw. zu befestigen.

22. Fliese nach Anspruch 21, wobei die Schließmittel eine Vielzahl von Schrauben umfassen, die geeignet sind, die Abdeckung und die Zwischenplatte zu überkreuzen und um in die Grundplatte einzugreifen.

23. Satz von Fliesen, der umfasst:
- wenigstens zwei Fliesen, die nach einem der vorhergehenden Ansprüche gefertigt sind;
- wenigstens einen eckigen bzw. winkeligen Einsatz (70, 80, 90, 100) für die mechanische Verbindung zwischen den Fliesen.

24. Satz nach Anspruch 23, wobei der Einsatz (70) viereckig und geeignet ist, um vier Fliesen an den benachbarten Ecken zu verbinden.

25. Satz nach Anspruch 23, wobei der Einsatz (80) L-förmig und geeignet ist, um drei Fliesen an den benachbarten Ecken zu verbinden.

26. Satz nach Anspruch 23, wobei der Einsatz (90) rechteckig und geeignet ist, um zwei Fliesen an den benachbarten Ecken zu verbinden.

27. Satz nach einem der Ansprüche 23 bis 26, der einen quadratischen Einsatz (100) umfasst, der geeignet ist, die Ecke einer Fliese zu bedecken.

## Revendications

1. Dalle (2) appropriée pour utiliser l'énergie solaire pour chauffer un liquide, par exemple de l'eau, passant à travers cette dernière, dans laquelle ladite dalle comprend:
- une base (4) appropriée pour reposer sur une surface de support ou être supportée sur un châssis;
- une plaque intermédiaire (20) agencée au-dessus de ladite base, comprenant un conduit (22) pour le passage dudit liquide;
- un couvercle (40) recouvrant partiellement ladite plaque intermédiaire pour la recouvrir;
- dans laquelle, dans une configuration assemblée de la dalle, un espace d'air inférieur clos (50) est défini entre la plaque intermédiaire (20) et la base et un espace d'air supérieur clos (60) est défini entre la plaque intermédiaire et le couvercle;
dans laquelle ladite dalle comprend en outre des moyens de séparation appropriés pour séparer l'espace d'air inférieur de l'espace d'air supérieur, et dans laquelle ladite plaque intermédiaire comprend une paroi de corps (24) et ledit conduit fait saillie de ladite paroi de corps, ladite paroi de corps séparant l'espace d'air inférieur de l'espace d'air supérieur,
dans laquelle ledit conduit s'étend le long d'une trajectoire retirée dans la dalle;
ladite dalle étant **caractérisée en ce que**
le conduit est formé comme une spire et ladite plaque intermédiaire est réalisée d'un seul tenant à partir d'une matière plastique, par un procédé de soufflage; dans laquelle ladite paroi de corps présente des moyens d'affaiblissement, appropriés pour affaiblir structurellement la partie de ladite paroi de corps à proximité du bord libre.

2. Dalle selon la revendication 1, dans laquelle ladite base comprend un espace de base entouré par une paroi de base annulaire périphérique (8), le bord de ladite paroi de corps étant en butée avec ladite paroi de base annulaire.

3. Dalle selon la revendication 2, dans laquelle ledit couvercle comprend un espace de recouvrement entouré par une paroi de recouvrement annulaire (44), le bord de ladite paroi de corps étant en butée avec ladite paroi de recouvrement annulaire.

4. Dalle selon les revendications précédentes, dans laquelle lesdits moyens d'affaiblissement comprennent une rainure d'affaiblissement (30) à proximité du bord libre de la paroi de bord (24).

5. Dalle selon la revendication 1, dans laquelle ladite rainure fait face à ladite base.

6. Dalle selon la revendication 4 ou 5, dans laquelle ladite rainure est parallèle au côté de la paroi de corps.

7. Dalle selon l'une quelconque des revendications précédentes, dans laquelle ladite base comprend des moyens de support appropriés pour supporter la plaque intermédiaire à des points discrets.

8. Dalle selon la revendication 6, dans laquelle lesdits moyens de support comprennent des nervures (10) faisant saillie du fond de la base.

9. Dalle selon la revendication 8, dans laquelle les moyens de support comprennent une paire de nervures qui se croisent et s'étendent le long de leurs diagonales.

10. Dalle selon l'une quelconque des revendications précédentes, dans laquelle ladite base est réalisée comme une pièce unique réalisée avec une matière plastique par moulage par injection.

11. Dalle selon l'une quelconque des revendications précédentes, dans laquelle le couvercle comprend un fond de recouvrement (42) et des saillies (46) faisant saillie dudit fond, extérieurement par rapport à l'espace d'air supérieur (60).

12. Dalle selon la revendication 11, dans laquelle lesdites saillies sont en forme de demi-capuchon.

13. Dalle selon l'une quelconque des revendications précédentes, dans laquelle ledit couvercle est réalisé comme une pièce unique à partir d'une matière plastique par un procédé de moulage par injection.

14. Dalle selon l'une quelconque des revendications précédentes, dans laquelle ledit couvercle est réalisé avec un matériau transparent ou semi-transparent.

15. Dalle selon l'une quelconque des revendications précédentes, dans laquelle ledit conduit fait saillie de ladite paroi de corps à partir d'une face et à partir de son autre face.

16. Dalle selon l'une quelconque des revendications précédentes, dans laquelle ladite plaque intermédiaire comprend une entrée (26) et une sortie (28) pour raccorder le conduit à un autre conduit d'une dalle supplémentaire et audit système de circulation de liquide.

17. Dalle selon la revendication 16, comprenant au moins un connecteur (110) approprié pour être inséré dans lesdites entrées pour le raccordement hydraulique du conduit.

18. Dalle selon la revendication 17, dans laquelle ledit connecteur comprend:
- une plaque de butée (112);
- un conduit d'entrée (114) faisant saillie de la plaque de butée sur son côté, approprié pour être inséré dans lesdites entrées;
- un conduit de sortie (116) en communication avec le conduit d'entrée, faisant saillie de la plaque de butée sur son autre côté;
- au moins une languette de positionnement (118a, 118b), faisant saillie de la plaque de butée du côté du conduit d'entrée, appropriée pour reposer en butée contre la base intermédiaire pour positionner le connecteur.

19. Dalle selon la revendication 18, dans laquelle ledit connecteur comprend une paire de languettes qui ne sont pas alignées entre elles, afin d'agencer une face et l'autre face de la plaque intermédiaire.

20. Dalle selon la revendication 19, dans laquelle ledit connecteur comprend une autre paire de languettes, agencées du côté du conduit de sortie.

21. Dalle selon l'une quelconque des revendications précédentes, comprenant des moyens de fermeture appropriés pour serrer ladite plaque intermédiaire entre ladite base et ledit couvercle.

22. Dalle selon la revendication 21, dans laquelle lesdits moyens de fermeture comprennent une pluralité de vis appropriées pour traverser le couvercle et la plaque intermédiaire et pour se mettre en prise avec ladite base.

23. Ensemble de dalles comprenant:
- au moins deux dalles réalisées selon l'une quelconque des revendications précédentes;
- au moins un insert angulaire (70, 80, 90, 100) pour le raccordement mécanique entre lesdites dalles.

24. Ensemble selon la revendication 23, dans lequel ledit insert (70) est quadrangulaire et approprié pour raccorder quatre dalles au niveau des coins adjacents.

25. Ensemble selon la revendication 23, dans lequel ledit insert (80) est en forme de L et approprié pour raccorder trois dalles au niveau des coins adjacents.

26. Ensemble selon la revendication 23, dans lequel ledit insert (90) est rectangulaire et approprié pour raccorder deux dalles au niveau des coins adjacents.

27. Ensemble selon l'une quelconque des revendications 23 à 26, comprenant un insert carré (100) approprié pour recouvrir le coin d'une dalle.
